# EUROPÄISCHE PATENTSCHRIFT

(11) **EP 3 620 037 B1**
(45) Veröffentlichungstag und Bekanntmachung des Hinweises auf die Patenterteilung: **30.08.2023**
(21) Anmeldenummer: 19186939.5
(22) Anmeldetag: 18.07.2019
(51) Int. Cl.: A01B 49/02, A01B 37/00

(54) **BODENBEARBEITUNGSGERÄT**
SOIL WORKING DEVICE
APPAREIL DE TRAVAIL DE LA TERRE

(30) Priorität: 06.09.2018 DE 202018105099 U
(43) Veröffentlichungstag der Anmeldung: 11.03.2020
(73) Patentinhaber: PÖTTINGER Landtechnik GmbH, 4710 Grieskirchen (AT)
(72) Erfinder: Preimeß, Hans-Jörg, 4710 Grieskirchen (AT)
(74) Vertreter: Thoma, Michael

(56) Entgegenhaltungen:
- WO-A1-2017/013175
- CA-A1- 2 223 782
- DE-A1- 2 735 902
- DE-A1- 2 945 896
- DE-A1-102010 000 527
- DE-A1-102016 118 093
- DE-U- 7 302 178
- US-A- 4 567 689

## Beschreibung

Die vorliegende Erfindung betrifft ein Bodenbearbeitungsgerät zum Anbau an einen Schlepper, mit einem Maschinenrahmen, an dem mehrere Bodenbearbeitungswerkzeuge in Form von Grubberzinken in mehreren Reihen angebracht sind, sowie einem Fahrwerk, das zwischen und/oder benachbart zu den Bodenbearbeitungswerkzeugen an dem Maschinenrahmen angeordnet ist, wobei das Fahrwerk eine Bodenbearbeitungsstellung zur Tiefenführung der Bodenbearbeitungswerkzeuge besitzt.

Verschiedene Bodenbearbeitungsgeräte sind aus den Schriften DE 10 2010 000 527 A1, DE 29 45 896 A1, WO 2017/013175 A1, DE 10 2016 118 093 A1, DE 27 35 902 A1 und CA 22 23 782 A1 bekannt. Dabei zeigt die DE 10 2010 000 527 A1 eine Sämaschine mit einem hinter den Säscharen angeordneten Fahrwerk, hinter dem Striegel für einen besseren Aufgang des Saatguts angeordnet sind. Bei der Schrift DE 29 45 896 A1 sind Saatstriegel in Form von schrägstehenden Blechen hinter den Säscharen angeordnet, um die Reifenspur aufzulockern und den Aufgang des Saatguts zu verbessern. Die WO 2017/013175 zeigt ebenfalls eine Sämaschine, bei der hinter den Laufrädern des Fahrwerks scheibenartige Auflockerungselemente angeordnet und drehbar gelagert sind, um die von den Rädern festgedrückte Bodenschicht wieder aufzulockern und die Schlepperspur zuzustreichen, um einen besseren Aufgang des Saatguts zu erzielen. Ferner sind aus den Schriften US 4 567 689 und DE 73 03 178 U Bodenbearbeitungsgeräte mit jeweils einem Grubberzinkenfeld bekannt, wobei im Bereich eines hinteren Endes des Grubberzinkenfelds eine Fahrwerksachse vorgesehen ist, die höhenverstellbar ist. Dabei sind in den Fahrspuren der Räder der genannten Fahrwerksachse in Fahrtrichtung dahinter Lockerungszinken vorgesehen, die über das genannte Fahrwerk zusammen mit den übrigen Grubberzinken des Grubberfelds höhenverstellbar sind.

Bei gezogenen Bodenbearbeitungsgeräten wie Grubbern oder auch evt. Scheibeneggen kann es sinnvoll sein, das an sich als Transportfahrwerk gedachte Fahrwerk in der Mitte der Maschine zwischen den Bodenbearbeitungswerkzeugen anzuordnen. Durch ein solchermaßen in das Feld der Bodenbearbeitungswerkzeuge integriertes Fahrwerk, welches sozusagen innerhalb, oder zumindest am Rand der Werkzeugmatrix angeordnet ist, kann auf der einen Seite eine kompakte Bauweise der Maschine erreicht werden. Auf der anderen Seite kann ein solches integriertes Fahrwerk auch zur Tiefenführung der Werkzeugeinheiten genutzt werden. Hierzu wird das Fahrwerk in eine Bodenbearbeitungsstellung gebracht, in der die Bodenbearbeitungswerkzeuge in den Boden eingreifen bzw. tiefer als die Aufstandsfläche des Fahrwerks gehen, welches hierbei die Bodenbearbeitungswerkzeuge in der Tiefe führt und den Maschinenrahmen am Boden abstützt.

Insbesondere können solche Bodenbearbeitungsgeräte, wie Grubber, auch ohne Nachläufer gefahren werden, wobei hierbei das genannte, integrierte Fahrwerk in seiner Bodenbearbeitungsstellung die Tiefenführung übernimmt. Ein solchermaßen konfiguriertes Bodenbearbeitungsgerät, insbesondere in Form eines Anbaugrubbers mit mehreren Reihen von Grubberzinken, wird üblicherweise im Spätherbst angewandt, wenn die bearbeitete Bodenoberfläche lose liegen bleiben soll, um über den Winter eine natürliche Frostgare an der Oberfläche zu ermöglichen.

Üblicherweise wird hierbei das integrierte Fahrwerk, in Fahrtrichtung betrachtet, vor der letzten Bodenbearbeitungs-Werkzeugreihe angeordnet, so dass die letzte Werkzeugreihe die teilweise verdichteten Spuren des Fahrwerks wieder auflockert und eine gleichmäßig bearbeitete Oberfläche hinterlässt. Ein Nachteil solcher Systeme besteht jedoch darin, dass das Fahrwerk in der Maschine bzw. innerhalb des Bodenwerkzeugfelds relativ weit vorne positioniert werden muss, so dass sich geringe oder gar negative Stützlasten an der Deichsel des Geräts ergeben können. Dies macht das Fahrverhalten instabil, weshalb bereits vorgeschlagen wurde, solche Systeme mit zusätzlichen Ballastgewichten im Frontbereich zu versehen. Solche Ballastgewichte verschlechtern jedoch den Spritverbrauch und führen zudem zu einer unerwünscht hohen Verdichtung der Böden durch die insgesamt zusätzliche Aufstandskraft.

Es wurde daher bereits vorgeschlagen, das Fahrwerk, bzw. eine Fahrwerksachse, hinter dem Feld der Grubberzinken, unmittelbar vor der Nachläuferwalze, anzuordnen. Ein solches System zeigt beispielsweise die Schrift EP 22 79 652 B1.

Wird bei einer solchen nach hinten versetzten Anordnung des Fahrwerks besagtes Fahrwerk nicht nur als Transportfahrwerk genutzt sondern auch als Arbeitsfahrwerk, welches in einer Bodenbearbeitungsstellung die Tiefenführung übernimmt, um einen Betrieb gegebenenfalls ohne Nachläuferwalze zu ermöglichen, entsteht das Problem, dass das Fahrwerk den durch die Grubberzinken aufgelockerten Boden wieder verdichtet und in den Fahrspuren des Fahrwerks der verdichtete Boden nicht mehr aufgelockert wird. Die an sich angestrebte, natürliche Frostgare über den Winter wird hierdurch beeinträchtigt.

Hiervon ausgehend liegt der vorliegenden Erfindung die Aufgabe zugrunde, ein verbessertes Bodenbearbeitungsgerät der eingangs genannten Art zu schaffen, das Nachteile des Standes der Technik vermeidet und letzteren in vorteilhafter Weise weiter bildet. Insbesondere soll mit einem Fahrwerk, das in einer Bodenbearbeitungsstellung eine Tiefenführung bewirken kann, ein spurstabiles Fahrverhalten ermöglicht werden, ohne bodenverdichtete Fahrspuren zu hinterlassen, die die natürliche Frostgare verhindern.

Erfindungsgemäß wird die genannte Aufgabe durch ein Bodenbearbeitungsgerät gemäß Anspruch 1 gelöst. Bevorzugte Ausgestaltungen der Erfindung sind Gegenstand der abhängigen Ansprüche.

Es wird also vorgeschlagen, das Fahrwerk mit zumindest einer Fahrwerksachse möglichst weit hinten im oder am Feld der Bodenbearbeitungswerkzeuge anzuordnen, um ein stabiles Fahrverhalten zu erreichen, die unerwünschte Bodenverdichtungen der Fahrspur jedoch dadurch zu verhindern, dass in der Fahrspur hinter dem Fahrwerk der Boden mit zumindest einem Lockerungszinken nochmals aufgelockert wird, um die eingetretenen Bodenverdichtungen in der Fahrspur des Fahrwerks wieder rückgängig zu machen. Erfindungsgemäß sind in Fahrtrichtung hinter dem Fahrwerk in dessen Spur Lockerungszinken zum Auflockern des Bodens in der vom Fahrwerk verdichteten Spur vorgesehen. Hierdurch kann ein stabiles Fahrverhalten erreicht werden, ohne die gewünschte natürliche Frostgare an der Oberfläche im Winter zu beeinträchtigen.

Vorteilhafterweise kann das Fahrwerk zumindest eine Fahrwerksachse aufweisen, die in Fahrtrichtung hinter den Bodenbearbeitungswerkzeugen angeordnet ist, die die bestimmungsgemäße Bodenbearbeitung des Geräts entsprechend dessen Bestimmungszweck ausführen. Insbesondere kann die genannte Fahrwerksachse hinter allen Grubberzinken des Grubberzinkenfelds angeordnet sein, insbesondere in einem Bereich, angrenzend an das genannte Grubberzinkenfeld. Die genannten Lockerungszinken zum Wiederauflockern der Fahrspur des Fahrwerks sind dabei nochmals hinter der genannten Fahrwerksachse positioniert.

Auch wenn eingangs erläutert wurde, dass das Bodenbearbeitungsgerät ohne Nachläufersystem betrieben werden kann, wenn das Fahrwerk in seiner Bodenbearbeitungsstellung die Tiefenführung übernimmt, kann nichtsdestotrotz an dem Bodenbearbeitungsgerät nachlaufend zu den Bodenbearbeitungswerkzeugen eine solche Nachläufereinheit vorgesehen sein und beispielsweise eine Packerwalze und/oder eine Nachlaufwalze und/oder eine Rillenwalze umfassen. Ein solches Nachläufersystem kann dann die Tiefenführung der vorauslaufenden Bodenbearbeitungswerkzeuge übernehmen, wobei das genannte Nachläufersystem, beispielsweise die Nachläuferwalze, gegenüber dem Maschinenrahmen höhenverstellbar aufgehängt sein kann. Um das Anbaugerät im Nachläuferbetrieb fahren zu können, kann es vorteilhaft sein, das vorgenannte Fahrwerk höhenverstellbar und/oder wegschwenkbar auszubilden, so dass das Transportfahrwerk soweit ausgehoben werden kann, dass nicht mehr das Fahrwerk den Maschinenrahmen auf dem Boden abstützt, sondern das Nachläufersystem. Gegebenenfalls kann auch mit beiden Elementen die Bodenabstützung bewerkstelligt werden, so dass ein Teil der Stützlast über das Nachläufersystem und ein Teil der Stützlast über das Fahrwerk abgetragen wird.

Ist ein solches Nachläufersystem vorgesehen, kann in vorteilhafter Weiterbildung der Erfindung das Fahrwerk, bzw. zumindest eine Fahrwerksachse des Fahrwerks, zwischen dem Bodenwerkzeugfeld und dem genannten Nachläufersystem angeordnet werden. Insbesondere kann die besagte Fahrwerksachse hinter allen Grubberzinken, jedoch vor dem Nachläufersystem angeordnet werden.

Die zuvor genannten Lockerungszinken können vorteilhafterweise zwischen der genannten Fahrwerksachse und dem Nachläufersystem angeordnet sein, um den Boden in der Fahrspur des Fahrwerks aufzulockern, wenn das Fahrwerk in der genannten Bodenbearbeitungsstellung gefahren und Aufstandskräfte über das Fahrwerk abgetragen werden.

Die Anordnung der Lockerungszinken zwischen dem Fahrwerk und dem Nachläufersystem bewirkt eine kompakte Bauweise. Gleichzeitig hilft ein kurzer Abstand zwischen Lockerungszinken und Fahrwerk, bei Kurvenfahrten einen Spurversatz zu verhindern.

Gemäß der Erfindung umfassen die genannten Lockerungswerkzeuge, die den Boden in der Spur des Fahrwerks lockern, Lockerungszinken.

Vorteilhafterweise können solche Lockerungszinken in Verbindung mit Bodenbearbeitungsscheiben, insbesondere in Form von Hohlscheiben, Verwendung finden. Dabei können schräg angestellte Scheiben paarweise zusammengefasst angeordnet sein, wobei jeweils ein Lockerungszinken zwischen und/oder hinter einem Scheibenpaar angeordnet sein kann, um in der Spur bzw. zwischen den Spuren der paarweisen Scheiben zu laufen und den Boden aufzulockern. Die genannten Scheiben können zur Fahrtrichtung und/oder zur Vertikalen, jeweils spitzwinklig geneigt, angestellt sein und drehbar gelagert sein.

Unabhängig hiervon können die genannten Scheiben eine gezackte oder zinnenartige oder wellenlinienförmig konturierte Umfangskontur besitzen.

Die Lockerungszinken können dabei hinter einem Scheibenpaar in dem von diesem Scheibenpaar aufgespannten V-förmigen Raum angeordnet sein bzw. sich entlang einer rückwärtigen Umfangskontur der Scheiben zwischen diesen nach unten zum Boden erstrecken.

Gemäß dem Gegenstand des Anspruchs 1 ist vorgesehen, dass die dem Fahrwerk nachlaufenden Lockerungswerkzeuge relativ zum Maschinenrahmen höheneinstellbar ausgebildet sind bzw. höhenveränderbar gelagert sind. Insbesondere können die vorgenannten Lockerungszinken relativ zu dem Scheibenpaar, dem sie zugeordnet sind, höhenverstellbar sein.

Die Höhenverstellbarkeit kann dabei derart beschaffen sein, dass verschiedene Arbeitspositionen mit verschiedenen Arbeitstiefen, in denen das Lockerungswerkzeug den Boden verschieden tief auflockert, eingestellt werden können. Insbesondere können die Lockerungszinken in verschiedenen Arbeitsstellungen relativ zu dem genannten Scheibenpaar gebracht werden, um verschieden weit über die Bodenkontur der besagten Scheiben nach unten vorzustehen oder oberhalb der genannten Bodenkontur der Scheiben angeordnet zu werden oder, im wesentlichen auf derselben Höhe der Bodenkontur der Scheiben positioniert zu werden.

Alternativ oder zusätzlich kann die Höhenverstellbarkeit der Bodenbearbeitungswerkzeuge auch derart beschaffen sein, dass die Lockerungswerkzeuge aus zumindest einer in den Boden eingreifenden Arbeitsstellung in eine den Boden nicht bearbeitende Inaktiv-Stellung verbracht werden können. Sind die vorgenannten Lockerungszinken vorgesehen, kann eine solche Nicht-Arbeitsstellung darin bestehen, dass die Lockerungszinken mit ihrem unteren Eingriffsabschnitt ein ausreichendes Stück weit oberhalb der Bodenkontur der zugeordneten Scheiben angeordnet sind.

Vorteilhafterweise können die Bodenbearbeitungswerkzeug zumindest näherungsweise linear höhenverstellt werden, so dass bei einer Höhenverstellung die Lockerungswerkzeuge zumindest näherungsweise ihre Ausrichtung bzw. ihren Anstellwinkel beibehalten. Jedoch können unterschiedliche Arbeitstiefen der Lockerungswerkzeuge eingestellt werden, ohne deren Anstellwinkel wesentlich zu verändern.

Insbesondere können Lockerungszinken in einer Schiebeführung gelagert sein, die aufrecht oder spitzwinklig zur Vertikalen geneigt, angeordnet sein kann, um bei Verschieben der Lockerungszinken eine entsprechende Höhenverstellung zu erzielen.

Vorteilhafterweise können die Schiebeführungen für die Lockerungswerkzeuge, zusammen mit den genannten Scheiben, die den Lockerungszinken zugeordnet sind, gemeinsam an einem Querträger gelagert sein, der mit dem Maschinenrahmen verbunden ist oder einen Teil des Maschinenrahmens bilden kann.

Die Erfindung wird nachfolgend anhand eines bevorzugten Ausführungsbeispiels und zugehöriger Zeichnungen näher erläutert. In den Zeichnungen zeigen:
- Fig. 1: eine perspektivische Rückansicht eines Bodenbearbeitungsgeräts in Form eines gezogenen Anbaugrubbers nach einer vorteilhaften Ausführung der Erfindung, wobei das in das Feld der Grubberzinken integrierte Fahrwerk in einer abgesenkten Bodenbearbeitungsstellung gezeigt ist,
- Fig. 2: eine perspektivische Rückansicht des Bodenbearbeitungsgeräts aus Fig. 1, ohne Nachläufer, wobei die in Fahrtrichtung hinter dem Fahrwerk und in der Konfiguration mit Nachläufer vor dem Nachläufer angeordneten Lockerungswerkzeuge zum Auflockern der vom Fahrwerk verdichteten Fahrspuren zu sehen sind,
- Fig. 3: eine Seitenansicht des Bodenbearbeitungsgeräts aus den vorhergehenden Figuren, die die Anordnung der hinteren Fahrwerksachse hinter der hintersten Grubberzinkenreihe und die Anordnung der Lockerungswerkzeuge hinter besagter Fahrwerksachse zeigt,
- Fig. 4: eine perspektivische Rückansicht der Lockerungswerkzeuge des Bodenbearbeitungsgeräts aus den vorhergehenden Figuren, wobei die Lockerungszinken und die zugeordneten Schrägscheiben in Arbeitsposition gezeigt sind,
- Fig. 5: eine perspektivische Rückansicht der Lockerungswerkzeuge, ähnlich Fig. 4, wobei die Lockerungszinken vergleichsweise einmal in Arbeitsposition und einmal in Nicht-Arbeitsposition gezeigt sind, und
- Fig. 6: eine Seitenansicht der Lockerungswerkzeuge aus den vorhergehenden Figuren, die die verschiebliche Verstellbarkeit der Lockerungszinken und deren Positionierung in Arbeitsposition und Nicht-Arbeitsposition zeigt.

Wie die Figuren zeigen, kann das gezogene Anbaugerät zur Bodenbearbeitung insbesondere als Grubber ausgebildet sein. Anstelle eines solchen gezogenen Anbaugrubbers 1 mit Grubberzinken könnte das Anbaugerät aber auch andere Bodenbearbeitungswerkzeuge wie Scharscheiben aufweisen und als Scheibenegge, oder auch als Kombinationsgerät mit verschieden ausgebildeten Bodenbearbeitungswerkzeugen ausgebildet sein. Wenn nachfolgend von Grubberzinken oder einem Mittelzinken gesprochen wird kann gleichermaßen bei anderer Ausbildung des gezogenen Anbaugeräts ein entsprechend anderes Bodenbearbeitungswerkzeug, wie eine Scharscheibe oder dergleichen, gemeint sein.

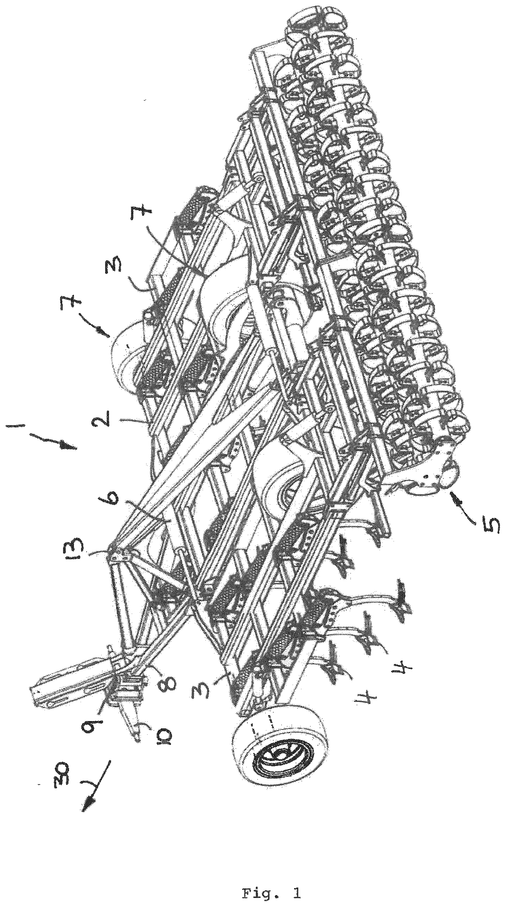

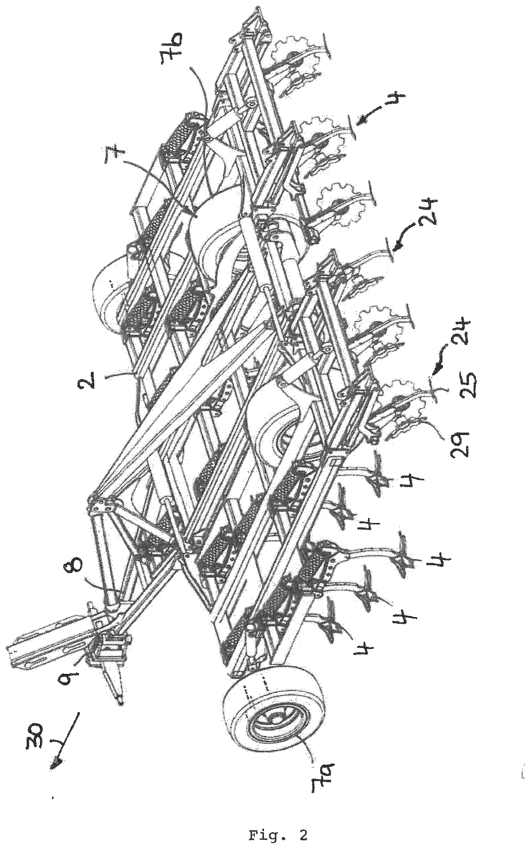

Wie Figuren 1 und 2 zeigen, umfasst der Anbaugrubber 1 einen Maschinenrahmen 2, der mehrere in Fahrtrichtung betrachtet, hintereinander angeordnete, liegende Querträger 3 umfasst, an denen jeweils mehrere Grubberzinken 4 aufgehängt sind,, sodass der Anbaugrubber 1 mehrere hintereinander angeordnete Zinkenreihen umfasst.

Den Grubberzinken 4 hinterherlaufend können eine oder mehrere Nachbearbeitungseinheiten 5 vorgesehen sein, beispielsweise in Form von Zustreichern und einer Nachläuferwalze, beispielsweise in Form einer Federscheibenwalze.

Wie Fig. 1 und 2 zeigen, können die genannten Querträger 3 jeweils unterteilt ausgebildet sein und/oder seitliche Klappabschnitte umfassen, sodass seitliche Maschinenflügel zusammen mit den daran angeordneten Bodenbearbeitungswerkzeugen bzw. Grubberzinken 4 aus der in den Figuren 1 und 2 abgesenkten, liegenden Arbeitsstellung um in Fahrtrichtung weisende Schwenkachsen nach oben in eine Transportstellung verbracht werden können. Eine entsprechende Hubschwenkvorrichtung kann beispielsweise Hydraulikzylinder 6 umfassen und die seitlichen Maschinenrahmenteile nach oben schwenken.

Wie Fig. 1 zeigt, kann dem Maschinenrahmen 2 ein Fahrwerk 7 zugeordnet sein, welches gemäß dem Gegenstand von Anspruch 1 höhenverstellbar gegenüber dem Maschinenrahmen 2 ausgebildet ist.

Ein solches Fahrwerk 7 kann zum Ausheben der Bodenbearbeitungswerkzeuge für den Straßentransport und/oder auch zur Arbeitstiefeneinstellung Verwendung finden. Hiervon unabhängig kann auch die genannte Nachläuferwalze 5 gegenüber dem Maschinenrahmen 2 höhenverstellbar sein, um die Arbeitstiefe regulieren zu können.

Wie die Figuren 2, 3 und 4 zeigen, ist frontseitig an dem Maschinenrahmen 2, insbesondere an dessen zentralen Rahmenteil, eine Deichsel 8 angebracht, die vom Maschinenrahmen 2 in Fahrtrichtung betrachtet nach vorne vorspringt und sich zumindest näherungsweise liegend erstrecken kann, um das Anbaugerät 1 an einem Schlepper anzuhängen und vom Schlepper ziehen zu können.

An einem vorderen Endabschnitt der Deichsel 8 kann ein Ankoppelgelenk 9 vorgesehen sein, welches ein Verschwenken der Deichsel 8 gegenüber dem Schlepper zumindest um eine aufrechte Achse, vorteilhafterweise aber auch mehrachsig erlaubt. Beispielsweise kann der in den Figuren gezeigte Querlenker 10, der an den Unterlenkern des Schleppers eingehängt werden kann, um ein Ankoppelgelenk 9 gegenüber der Deichsel 8 verschwenkt werden. Alternativ zu einem solchen Querlenker 10 können aber auch andere Anbaumittel und -gelenke Verwendung finden, beispielsweise ein Kugelgelenk bzw. ein Kugelkopf oder eine Zugöse oder ähnliche gelenkige Anbau- bzw. Ankoppelmittel.

An einem vorderen Endabschnitt der Deichsel 8 kann ein Ankoppelgelenk 9 vorgesehen sein, welches ein Verschwenken der Deichsel 8 gegenüber dem Schlepper zumindest um eine aufrechte Achse, vorteilhafterweise aber auch mehrachsig erlaubt. Beispielsweise kann der in den Figuren gezeigte Querlenker 10, der an den Unterlenkern des Schleppers eingehängt werden kann, um ein Ankoppelgelenk 9 gegenüber der Deichsel 8 verschwenkt werden. Alternativ zu einem solchen Querlenker 10 können aber auch andere Anbaumittel und -gelenke Verwendung finden, beispielsweise ein Kugelgelenk bzw. ein Kugelkopf oder eine Zugöse oder ähnliche gelenkige Anbau- bzw. Ankoppelmittel.

Vorteilhafterweise ist die genannte Deichsel 8 an dem Maschinenrahmen 2 um eine liegende Querachse schwenkbar angelenkt, so dass die Deichsel 8 gegenüber dem Maschinenrahmen 2 auf- und niederwippen kann. Insbesondere kann die Deichsel 8 an einem vordersten der genannten Querträger 3 des Maschinenrahmens 2 angelenkt sein, wobei sich die liegende Deichselschwenkachse insbesondere parallel an dem vordersten Querträger 3 erstrecken kann.

Die Deichsel 8 ist dabei über eine Deichselstützstrebe 12 an einem Kopf 13 des Maschinenrahmens 2 abgestützt, wobei die genannte Deichselstützstrebe 12 einerseits an der Deichsel 8 angelenkt und andererseits an besagtem Kopf 13 des Maschinenrahmens 2 angelenkt ist und an sich die Schwenkbewegung der Deichsel 8 um die zuvor genannte Deichselschwenkachse 11 blockiert bzw. begrenzt.

Vorteilhafterweise kann die genannte Deichselstützstrebe 12 längenveränderbar ausgebildet sein, beispielsweise teleskopierbar sein und zwei oder auch mehr ineinander schiebbare Strebenteile umfassen. Alternativ oder zusätzlich kann auch ein am Kopf 13 oder der Deichsel 8 verschiebbarer Anlenkpunkt für die Deichselstützstrebe 12 vorgesehen sein, beispielsweise in Form einer Langlochführung oder einer anderen Schiebeführung, um die effektive Länge der Deichselstützstrebe 12 justieren zu können.

Wie die Figuren 1, 2 und 3 zeigen, kann das Fahrwerk 7 mehrachsig ausgebildet sein und eine vordere Fahrwerksachse 7a und eine hintere Fahrwerksachse 7b umfassen, wobei auf jeder Fahrwerksachse 7a bzw. 7b zumindest ein Rad oder auch mehrere spurbeabstandete Räder 23 vorgesehen sein können. Dabei können die Fahrwerksachsen in das Feld der Grubberzinken 4 integriert bzw. unmittelbar benachbart daran angeordnet sein. Beispielsweise kann die vordere Fahrwerksachse 7a an einem vorderen Randbereich des Grubberzinkenfelds angeordnet sein, wobei die Räder 23 der vorderen Fahrwerksachse 7a beispielsweise am äußeren Rand der Grubberzinkenmatrix angeordnet sein können. Die Spurbreite der vorderen Fahrwerksachse 7a kann näherungsweise der Breite des Grubberzinkenfelds entsprechen oder auch geringfügig größer sein oder auch geringfügig kleiner sein.

Die hintere Fahrwerksachse 7b kann ebenfalls im Bereich des hinteren Randabschnitts des Grubberzinkenfelds sein und insbesondere etwa auf Höhe der hintersten Grubberzinken 4 oder gegebenenfalls auch leicht dahinter angeordnet sein. Die Räder 23 der hinteren Fahrwerksachse 7b können eine geringere Spurbreite als die vordere Fahrwerksachse 7a definieren, wobei die Spurbreite bzw. der Abstand der beiden Räder 23 der hinteren Fahrwerksachse 7b beispielsweise kleiner sein kann als die Breite des Grubberzinkenfelds, insbesondere etwa im Bereich von 50 % bis 90 % der maximalen Breite des Grubberzinkenfelds.

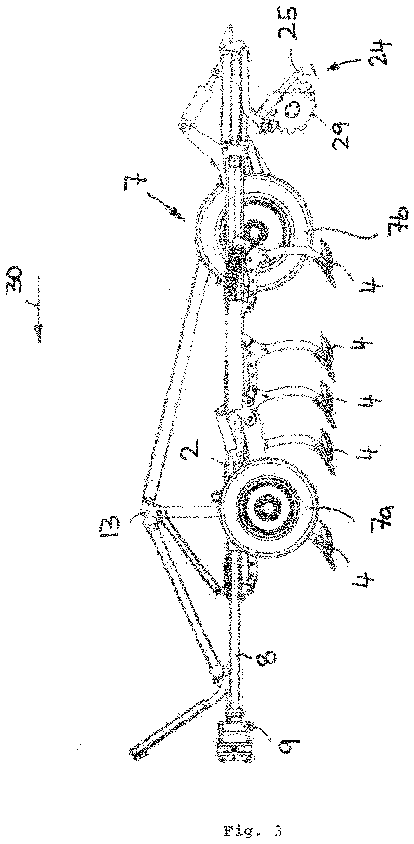

Wie Fig. 3 zeigt, können die Räder 23 der hinteren Fahrwerksachse 7b, in Fahrtrichtung betrachtet, ein Stück weit nach hinten hinter die hintersten Grubberzinken 4 versetzt angeordnet sein, wobei beispielsweise die Radachse hinter den Grubberzinken 4 angeordnet sein kann, während ein vorderer Radabschnitt mit den Grubberzinken 4 der hintersten Grubberzinkenreihe überlappend angeordnet sein kann, wenn das Gerät in Richtung der Radachse betrachtet wird, wie dies Fig. 3 zeigt.

Das Fahrwerk 7 ist vorteilhafterweise höhenverstellbar ausgebildet, so dass die Räder 23 des Fahrwerks 7 relativ zum Maschinenrahmen 2 abgesenkt und abgehoben werden können. Beispielsweise können die Achsen der Räder 23 an Achsträgerschwingen aufgehängt sein, die schwenkbar am Maschinenrahmen 2 gelagert sein können, so dass die Räder durch Verschwenken der Achsschwingen hoch- und tiefverstellt werden können.

Grundsätzlich wäre es aber auch möglich, ein nicht-höhenverstellbares Fahrwerk 7 zu verwenden, wobei dann das Fahrwerk 7 die in den Zeichnungen dargestellte Bodenbearbeitungsstellung einnimmt.

Ist das Fahrwerk 7 höhenverstellbar, kann einerseits die in den Zeichnungen dargestellte Bodenbearbeitungsstellung eingestellt werden, in der die Grubberzinken 4 ein Stück weit unter der Bodenaufstandsfläche des Fahrwerks 7 laufen, so dass die Höhendifferenz zwischen der Bodenaufstandsfläche des Fahrwerks 7 und den Grubberzinken 4 bzw. deren unteren Endabschnitt die Bearbeitungstiefe zumindest näherungsweise darstellt. Andererseits kann das Fahrwerk bei Höhenverstellbarkeit gleichzeitig auch als Transportfahrwerk dienen, wobei das Fahrwerk 7 hierzu in eine Transportstellung - im Vergleich zur in den Zeichnungen gezeigten Bodenbearbeitungsstellung - weiter gegenüber dem Maschinenrahmen 2 abgesenkt wird, so dass die Grubberzinken 4 mit ihren unteren Endabschnitten ausreichend weit oberhalb der Bodenaufstandsfläche des Fahrwerks 7 zu liegen kommen, um beim Straßentransport nicht am Boden zu kratzen.

Ferner die Höhenverstellbarkeit des Fahrwerks 7 derart ausgebildet sein, dass das Fahrwerk 7 in eine Inaktiv-Stellung verbringbar ist, insbesondere, wenn das Gerät auf dem Nachläufer bzw. der Nachläufereinheit 5 abgestützt werden soll. Hierzu wird dann das Fahrwerk 7 soweit nach oben über die in den Zeichnungen gezeigte Bodenbearbeitungsstellung weiter ausgehoben, so dass das Gerät nicht mehr auf dem Fahrwerk 7, sondern auf dem Nachläufer 5 abgestützt ist.

Wie Fig. 3 zeigt, können die Bodenbearbeitungswerkzeuge mit ihrem bestimmungsgemäßen Bodeneingriffsabschnitt im Wesentlichen vollständig unter der Bodenaufstandsfläche des Fahrwerks 7 positioniert sein, wenn das Fahrwerk 7 in seiner Bodenbearbeitungsstellung ist. Die genannten Grubberzinken 4 können als Bodeneingriffsabschnitt insbesondere Scharstege oder Eingriffsflügel aufweisen, die in der besagten Bodenbearbeitungsstellung des Fahrwerks 7 unterhalb dessen Bodenaufstandsfläche liegen, vgl. Fig. 3.

Wie ebenfalls Fig. 3 zeigt, sind, in Fahrtrichtung betrachtet, hinter der hinteren Fahrwerksachse 7b des Fahrwerks 7 Lockerungswerkzeuge 24 vorgesehen, die den vom Fahrwerk 7 verdichteten Boden in der Fahrspur des Fahrwerks wieder auflockern. Diese Lockerungswerkzeuge 24 können ausschließlich in den Fahrspuren des Fahrwerks 7 angeordnet sein. Alternativ ist es aber auch möglich, weitere solche Lockerungswerkzeuge 24 zwischen den Fahrspuren des Fahrwerks 7 anzuordnen.

Die genannten Lockerungswerkzeuge 24 sind dabei von den Bodenbearbeitungswerkzeugen, die die bestimmungsgemäße Bodenbearbeitung des Anbaugeräts 1 gemäß dessen Verwendungszweck ausführen, verschieden ausgebildet. Insbesondere können die Lockerungswerkzeuge 24 den Boden in geringerem Maße bearbeiten und/oder weniger Bearbeitungsenergie in den Boden einbringen als die vor der Fahrwerksachse 7b angebrachten Bodenbearbeitungswerkzeuge. Insbesondere können die Lockerungswerkzeuge 24 eine geringere Arbeitstiefe und/oder eine geringere, aktive Eingriffsfläche, die bestimmungsgemäß in den Boden eingreift, aufweisen, als die der Fahrwerksachse 7b vorauslaufenden Bodenbearbeitungswerkzeuge. Im Vergleich zu den Grubberzinken 4 können die besagten Lockerungswerkzeuge 24 eine geringere Arbeitstiefe und kürzere und/oder kleinere Eingriffsflügel aufweisen.

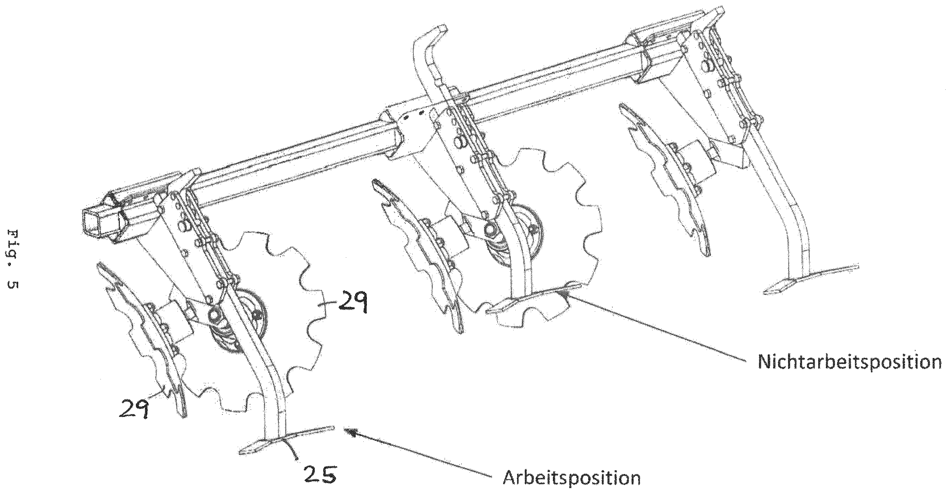

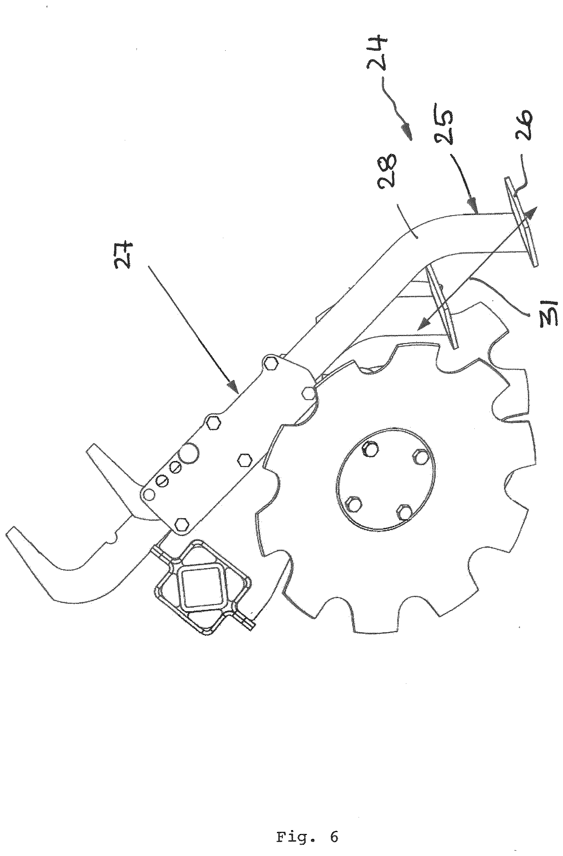

Die besagten Lockerungswerkzeuge 24 können insbesondere Lockerungszinken 25 aufweisen, die einen vorzugsweise schräg nach unten weisenden Zinkenkorpus umfassen, dessen unteres Ende in den Boden eingreift, um den Boden aufzulockern. Wie Figuren 5 und 6 zeigen, können die genannten Lockerungszinken 25 dabei an ihren unteren Enden oder kurz oberhalb der unteren Enden oder in einem Endabschnitt seitlich abstehende Lockerungsflügel, beispielsweise in Form von Scharflügeln 26, aufweisen, um den Boden zusätzlich aufzulockern. Vorteilhafterweise können die besagten Lockerungsflügel 26 in der Arbeitsstellung der Lockerungszinken 25 spitzwinklig geneigt zur Horizontalen angestellt sein, insbesondere entgegen der Fahrtrichtung nach hinten leicht ansteigen, um das Erdreich nach oben aufzulockern bzw. aufzuwerfen, wenn die Lockerungsflügel 26 durch den Boden segeln bzw. kratzen.

Wie Figuren 5 und 6 verdeutlichen, sind die genannten Lockerungszinken 25 vorteilhafterweise höhenverstellbar gelagert, wobei vorteilhafterweise eine Linearführung 27 zur verschieblichen Führung der Lockerungszinken 25 vorgesehen sein kann. Durch eine solche Linearführung 27 verändert sich bei Höhenverstellen der Lockerungszinken 25 der Anstellwinkel der Lockerungsflügel 26 nicht.

Wie Fig. 6 zeigt, kann die Linearführung 27 ein schräges Verschieben der Lockerungszinken 25 vorsehen, wobei eine Schieberichtung 28 bzw. eine Verstellrichtung der Linearführung 27 in einem Winkel von beispielsweise 10° bis 80° zur Vertikalen, insbesondere etwa 30° bis 60° zur Vertikalen betragen kann.

Die Lockerungszinken 25 können einen im Wesentlichen geraden Führungsabschnitt aufweisen, welcher in der genannten Linearführung 27 geführt ist. Unabhängig hiervon können die Lockerungszinken 25 zu ihrem unteren Endabschnitt hin eine Abkröpfung 29 aufweisen, durch die sich der Zinkenkorpus zu seinem unteren Endabschnitt hin zunehmend steiler auf den Boden zu erstreckt, vgl. Fig. 6.

Die Lockerungszinken 25 können in der Linearführung 27 in verschiedenen Stellungen fixiert, bzw. blockiert werden, um verschiedene Höheneinstellungen vornehmen zu können. Beispielsweise kann in dem Zinkenkorpus ein Lochbild oder Ausnehmungsbild vorgesehen sein, in das ein Riegel, beispielsweise in Form eines Steckbolzens, eingreifen und den Zinken blockieren kann.

Wie die Figuren 5 und 6 zeigen, können die Lockerungszinken 25 zwischen einer angehobenen Nicht-Arbeitsposition und einer abgesenkten Arbeitsposition höhenverstellt werden. In der Nicht-Arbeitsposition laufen die Zinken oberhalb des Bodens und greifen in diesen nicht ein, während in der abgesenkten Arbeitsstellung ein Bodeneingriff erfolgt.

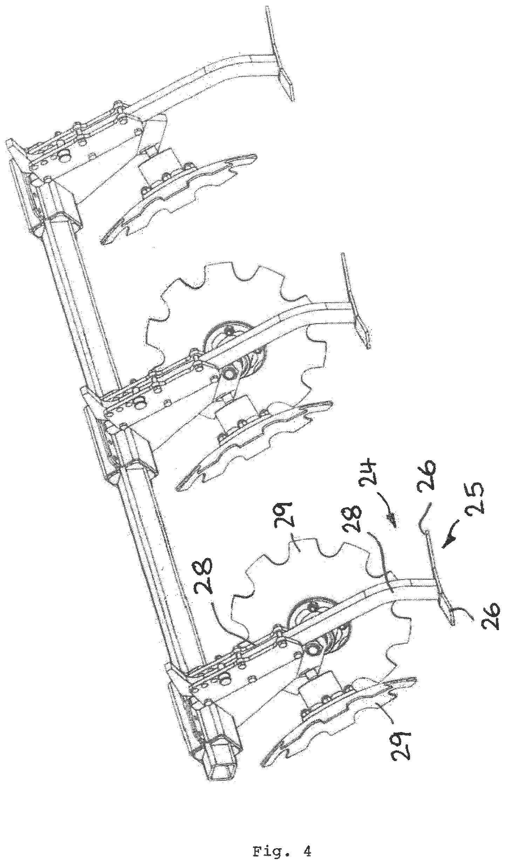

Die Lockerungswerkzeuge 24 können alternativ oder zusätzlich zu den besagten Lockerungszinken 25 auch noch Bodeneingriffsscheiben 29 aufweisen, die insbesondere als Schrägscheiben ausgebildet sein können, die um eine Drehachse drehbar gelagert sind, welche Drehachse sich gegenüber eine horizontalen Ebene spitzwinklig geneigt und/oder gegenüber einer vertikalen Querebene, die sich senkrecht zur Fahrtrichtung erstreckt, spitzwinklig geneigt sein können. Insbesondere können die besagten Scheiben 29 paarweise angeordnet und so schräg gestellt sein, dass sie einen zwischen sich V-förmig aufgespreizten Raum begrenzen, dessen Hauptachse sich entgegen der Fahrtrichtung schräg nach hinten oben erstrecken kann, d.h. die Scheiben eines Scheibenpaars laufen nach hinten/oben auseinander, wie dies die Figuren 4 und 5 zeigen.

Die genannten Scheiben 29 bzw. ein entsprechendes Scheibenpaar kann jeweils einem Lockerungszinken 25 zugeordnet sein, so dass ein Scheibenpaar jeweils einem Lockerungszinken 25 vorausläuft. Die Scheiben 29, die einem Lockerungszinken 25 zugeordnet sind, können dabei ein stück weit voneinander beabstandet sein, so dass der nachlaufende Lockerungszinken 25 in einem Spurbereich zwischen den zugeordneten Scheiben 29 läuft.

Wie Fig. 6 zeigt, können die Lockerungszinken 25 in ihrer abgesenkten Arbeitsstellung mit ihren unteren Eingriffsabschnitten etwa auf Höhe der unteren Eingriffsabschnitte der besagten Scheiben 29 angeordnet sein. Sind indes die Lockerungszinken 25 in ihre Nicht-Arbeitsstellung ausgehoben, vgl. Fig. 6, liegen die Eingriffsabschnitte der Lockerungszinken 25 deutlich oberhalb des unteren Umfangsabschnitts der besagten Scheiben 29.

Die Lockerungszinken 25 können also vorteilhafterweise relativ zu den zugeordneten Scheiben 29 höhenverstellt werden.

## Patentansprüche

1. Bodenbearbeitungsgerät zum Anbau an einen Schlepper in Form eines gezogenen Anbaugrubbers, mit einem Maschinenrahmen (2), an dem ein Grubberzinkenfeld umfassend mehrere Bodenbearbeitungswerkzeuge in Form von Grubberzinken (4) in mehreren Reihen angebracht ist, sowie einem Fahrwerk (7), das zwischen und/oder benachbart zu den Bodenbearbeitungswerkzeugen am Maschinenrahmen (2) angebracht ist, wobei das Fahrwerk (7) zum Ausheben der Grubberzinken (4) für den Straßentransport und/oder zur Arbeitstiefeneinstellung der Grubberzinken (4) gegenüber dem Maschinenrahmen (2) höhenverstellbar ausgebildet ist und eine Bodenbearbeitungsstellung zur Tiefenführung der Bodenbearbeitungswerkzeuge sowie eine Fahrwerksachse (7b) im Bereich eines hinteren Randabschnitts des Grubberzinkenfelds besitzt, **dadurch gekennzeichnet, dass** in Fahrtrichtung (30) hinter dem Fahrwerk (7) in dessen Fahrspur Lockerungswerkzeuge (24) umfassend Lockerungszinken (25) mit seitlich abstehenden Scharflügeln (26) zum Auflockern des Bodens in der vom Fahrwerk (7) verdichteten Fahrspur vorgesehen sind, die ebenfalls gegenüber dem Maschinenrahmen (2), an dem das Grubberzinkenfeld angebracht ist, höhenverstellbar gelagert und zwischen einer abgesenkten Arbeitsposition und einer angehobenen Nicht-Arbeitsstellung relativ zum genannten Maschinenrahmen (2) verstellbar sind.

2. Bodenbearbeitungsgerät nach dem vorhergehenden Anspruch, wobei die zumindest eine Fahrwerksachse (7b) in Fahrtrichtung (30) hinter den mehreren Reihen von Bodenbearbeitungswerkzeugen angeordnet ist, und die Lockerungswerkzeuge (24) hinter der genannten Fahrwerksachse (7b) angeordnet sind.

3. Bodenbearbeitungsgerät nach einem der vorhergehenden Ansprüche, wobei an dem Maschinenrahmen (2) heckseitig hinter dem Fahrwerk (7) ein Nachläufer (5) anbringbar ist, wobei die Lockerungswerkzeuge (24), in Fahrtrichtung (30) betrachtet, vor dem Nachläufer (5) angeordnet sind.

4. Bodenbearbeitungsgerät nach dem vorhergehenden Anspruch, wobei der Nachläufer (5) eine Nachläuferwalze umfasst.

5. Bodenbearbeitungsgerät nach einem der vorhergehenden Ansprüche, wobei das Fahrwerk (7) zusätzlich zu der genannten Bodenbearbeitungsstellung eine abgesenkte Transportstellung besitzt, in der die Bodenbearbeitungswerkzeuge über die Bodenaufstandsfläche des Fahrwerks (7) ausgehoben sind.

6. Bodenbearbeitungsgerät nach dem vorhergehenden Anspruch, wobei das Fahrwerk (7) eine angehobene Inaktiv-Stellung für einen Arbeitsbetrieb, in dem ein/der Nachläufer (5) den Maschinenrahmen (2) am Boden abstützt und die Tiefenführung der Bodenbearbeitungswerkzeuge bewirkt, besitzt.

7. Bodenbearbeitungsgerät nach einem der vorhergehenden Ansprüche, wobei die seitlich quer zur Fahrtrichtung (30) abstehende Scharflügel (26) gegenüber der Horizontalen spitzwinklig geneigt angestellt sind.

8. Bodenbearbeitungsgerät nach einem der orhergehenden Ansprüche, wobei den Lockerungszinken (25) jeweils ein Paar Bodenbearbeitungsscheiben (29) zugeordnet sind, die den Lockerungszinken (24) vorauslaufend angeordnet und zur Fahrtrichtung (30) spitzwinklig schräg angestellt sind, wobei die Scheiben (29) paarweise zwischen sich einen Raum begrenzen, der sich entgegen der Fahrtrichtung (30) zur Horizontalen spitzwinklig nach oben erweitert.

9. Bodenbearbeitungsgerät nach einem der vorhergehenden Ansprüche, wobei die Höheneinstellvorrichtung zum Höhenverstellen der Lockerungswerkzeuge (24) eine Linearführung (27) zum linearen Verstellen der Lockerungszinken (25) umfasst.

10. Bodenbearbeitungsgerät nach einem der vorhergehenden Ansprüche, wobei die Lockerungszinken (25) relativ zu den Scheiben (29) höhenverstellbar gelagert sind.

11. Bodenbearbeitungsgerät nach einem der vorhergehenden Ansprüche, wobei die Lockerungszinken (25) und die Scheiben (29) an einem gemeinsamen Querträger gelagert sind.

12. Bodenbearbeitungsgerät nach einem der vorhergehenden Ansprüche, wobei die Lockerungswerkzeuge (24) eine geringere Arbeitstiefe und/oder eine geringere Arbeitsbreite als die Bodenbearbeitungswerkzeuge besitzen.

13. Bodenbearbeitungsgerät nach einem der vorhergehenden Ansprüche, wobei das Bodenbearbeitungsgerät eine Deichsel (8) aufweist, die am Maschinenrahmen (2) angelenkt, insbesondere gelenkig angelenkt ist und ein Ankoppelgelenk (9) zum gelenkigen Ankoppeln an den Schlepper aufweist.

## Claims

1. Soil working device for installation on a tractor in the form of a towed cultivator, having a machine frame (2) to which a cultivator tine field comprising a plurality of soil working devices in the form of cultivator tines (4) in a plurality of rows is attached, and a running gear (7) attached the machine frame (2) between and/or adjacent to the soil working devices, wherein the running gear (7) is designed so as to be height-adjustable with respect to the machine frame (2) in order to raise the cultivator tines (4) for road transport and/or in order to adjust the working depth of the cultivator tines (4) and has a ground working position for depth guidance of the ground working tools and a running gear axle (7b) in the region of a rear edge portion of the cultivator tine field, **characterised in that** loosening tools (24) comprising loosening tines (25) having laterally projecting share wings (26) are provided in the direction of travel (30) behind the running gear (7) in its track for loosening the soil in the track compacted by the running gear (7), which are also mounted so as to be height-adjustable with respect to the machine frame (2), to which the cultivator tine field is attached, and are adjustable between a lowered working position and a raised non-working position relative to said machine frame (2).

2. Soil working device according to the preceding claim, wherein the at least one running gear axle (7b) is arranged behind the plurality of rows of soil working devices in the direction of travel (30), and the loosening devices (24) are arranged behind said running gear axle (7b).

3. Soil working device according to any one of the preceding claims, wherein a follower (5) is attachable to the machine frame (2) at the rear behind the running gear (7), wherein the loosening tools (24) are arranged in front of the follower (5) as viewed in the direction of travel (30).

4. Soil working device according to the preceding claim, wherein the follower (5) comprises a follower roller.

5. Soil working device according to any one of the preceding claims, wherein the running gear (7), in addition to said ground working position, has a lowered transport position in which the soil working devices are raised above the soil contact surface of the running gear (7).

6. Soil working device according to the preceding claim, wherein the running gear (7) has a raised inactive position for a working mode in which a/the follower (5) supports the machine frame (2) on the ground and provides depth guidance for the soil working tools.

7. Soil working device according to any one of the preceding claims, wherein the share wings (26) projecting laterally transversely to the direction of travel (30), are placed to be inclined at an acute angle to the horizontal.

8. Soil working device according to any one of the preceding claims, wherein the loosening tines (25) are each associated with a pair of soil working discs (29) which are arranged ahead of the loosening tines (24) and are placed to be oblique at an acute angle to the direction of travel (30), wherein the discs (29) define between them, in pairs, a space which widens upwards at an acute angle to the horizontal, opposed to the direction of travel (30).

9. Soil working device according to any one of the preceding claims, wherein the height adjustment device for height adjustment of the loosening tools (24) comprises a linear guide (27) for linear adjustment of the loosening tines (25).

10. Soil working device according to any one of the preceding claims, wherein the loosening tines (25) are mounted so as to be height-adjustable relative to the discs (29).

11. Soil working device according to any one of the preceding claims, wherein the loosening tines (25) and the discs (29) are mounted on a common crossmember.

12. Soil working device according to any one of the preceding claims, wherein the loosening tools (24) have a smaller working depth and/or a smaller working width than the soil working tools.

13. Soil working device according to any one of the preceding claims, wherein the soil working device comprises a drawbar (8) which is joined, in particular hingedly joined, to the machine frame (2) and comprises a coupling joint (9) for hinged coupling to the tractor.

## Revendications

1. Appareil de travail du sol destiné à être monté sur un tracteur sous la forme d'un cultivateur tracté, avec un châssis de machine (2) sur lequel est monté un champ de dents de cultivateur comprenant plusieurs outils de travail du sol sous la forme de dents de cultivateur (4) en plusieurs rangées, ainsi qu'un mécanisme de roulement (7) qui est monté sur le châssis de machine (2) entre et/ou au voisinage des outils de travail du sol, le mécanisme de roulement (7) étant configuré de manière réglable en hauteur par rapport au châssis de machine (2) pour soulever les dents de cultivateur (4) pour le transport sur route et/ou pour ajuster la profondeur de travail des dents de cultivateur (4) et possédant une position de travail du sol pour le guidage en profondeur des outils de travail du sol ainsi qu'un axe de mécanisme de roulement (7b) dans la zone d'une section de bord arrière du champ de dents de cultivateur, **caractérisé en ce que** des outils d'ameublissement (24) comprenant des dents d'ameublissement (25) avec des ailes de soc (26) faisant saillie latéralement sont prévus dans le sens de la marche (30) derrière le châssis (7) dans sa piste de roulement pour ameublir le sol dans la piste de roulement compactée par le mécanisme de roulement (7), qui sont également montées de manière réglable en hauteur par rapport au châssis de machine (2), sur lequel est monté le champ de dents de cultivateur, et qui peuvent être réglées entre une position de travail abaissée et une position de non-travail relevée par rapport audit châssis de machine (2).

2. Appareil de travail du sol selon la revendication précédente, dans lequel l'au moins un essieu de mécanisme de roulement (7b) est agencé derrière les plusieurs rangées d'outils de travail du sol dans le sens de la marche (30), et les outils d'ameublissement (24) sont agencés derrière ledit essieu de mécanisme de roulement (7b).

3. Appareil de travail du sol selon l'une quelconque des revendications précédentes, dans lequel un suiveur (5) peut être monté sur le châssis de machine (2), à l'arrière, derrière le mécanisme de roulement (7), les outils d'ameublissement (24) étant agencés, considérés dans le sens de la marche (30), devant le suiveur (5).

4. Appareil de travail du sol selon la revendication précédente, dans lequel le suiveur (5) comprend un rouleau suiveur.

5. Appareil de travail du sol selon l'une quelconque des revendications précédentes, dans lequel le mécanisme de roulement (7), en plus de ladite position de travail du sol, possède une position de transport abaissée, dans laquelle les outils de travail du sol sont soulevés au-dessus de la surface de contact avec le sol du mécanisme de roulement (7).

6. Appareil de travail du sol selon la revendication précédente, dans lequel le mécanisme de roulement (7) possède une position inactive relevée pour un mode de travail dans lequel un/le suiveur (5) soutient le châssis de machine (2) au sol et assure le guidage en profondeur des outils de travail du sol.

7. Appareil de travail du sol selon l'une quelconque des revendications précédentes, dans lequel les ailes de soc (26), qui font saillie latéralement transversalement par rapport au sens de la marche (30), sont inclinées a un angle aigu par rapport à l'horizontale.

8. Appareil de travail du sol selon l'une quelconque des revendications précédentes, dans lequel les dents d'ameublissement (25) sont associées chacune à une paire de disques de travail du sol (29) qui sont agencés en avant des dents d'ameublissement (24) et sont obliques à angle aigu par rapport au sens de la marche (30), les disques (29) délimitant entre eux, par paires, un espace qui s'élargit vers le haut à angle aigu par rapport à l'horizontale, à l'encontre du sens de la marche (30).

9. Appareil de travail du sol selon l'une quelconque des revendications précédentes, dans lequel le dispositif de réglage en hauteur pour le réglage en hauteur des outils d'ameublissement (24) comprend un guide linéaire (27) pour le réglage linéaire des dents d'ameublissement (25).

10. Appareil de travail du sol selon l'une quelconque des revendications précédentes, dans lequel les dents d'ameublissement (25) sont montées de manière réglable en hauteur par rapport aux disques (29).

11. Appareil de travail du sol selon l'une quelconque des revendications précédentes, dans lequel les dents d'ameublissement (25) et les disques (29) sont montés sur un support transversal commun.

12. Appareil de travail du sol selon l'une quelconque des revendications précédentes, dans lequel les outils d'ameublissement (24) possèdent une profondeur de travail plus faible et/ou une largeur de travail plus faible que les outils de travail du sol.

13. Appareil de travail du sol selon l'une quelconque des revendications précédentes, dans lequel l'appareil de travail du sol présente un timon (8) qui est relié, notamment relié de manière articulée, au châssis de machine (2) et qui présente une articulation d'accouplement (9) pour l'accouplement articulé au tracteur.
